# EUROPÄISCHE PATENTANMELDUNG

(11) **EP 3 015 293 A1**
(43) Veröffentlichungstag der Anmeldung: **04.05.2016**
(21) Anmeldenummer: 15186407.1
(22) Anmeldetag: 23.09.2015
(51) Int. Cl.: B60C 23/00

(54) **EINRICHTUNG ZUR EINSTELLUNG DES LUFTDRUCKS EINES LUFTREIFENS**

(30) Priorität: 27.10.2014 DE 102014221813
(71) Anmelder: Schaeffler Technologies AG & Co. KG, 91074 Herzogenaurach (DE)
(72) Erfinder: Landeck, Carsten, 90427 Nürnberg (DE)

(57) **Zusammenfassung**

Einrichtung zur Einstellung des Luftdrucks eines an einer Fahrzeugachse über eine Felge angeordneten Luftreifens, umfassend eine auf einem positionsfesten Achsgehäuse (3) aufzusetzende Hülse (14) mit zwei separaten, umfangsmäßig versetzten Luftkanälen (19, 19'), die jeweils eine Einlassbohrung (21, 21'), an der eine Druckluftleitung (8, 9) anschließbar ist, und jeweils eine erste Radialbohrung (23, 23') aufweisen, eine auf die Hülse (14) aufgesetzte Ringanordnung (46) mit wenigstens zwei zweiten Radialbohrungen (26, 27) und jeweils einer umlaufenden Nut (47, 48) am Innendurchmesser, die mit jeweils einer ersten Radialbohrung (23, 23') kommuniziert, sowie einen Überring (28), der einen Radialabschnitt (29) aufweist, mit dem er drehfest mit der Fahrzeugachse (1) zu verbinden ist, und der einen Axialabschnitt (30) aufweist, mit dem er die Ringanordnung (46) übergreift, und der zwei Auslassbohrungen (36, 37) aufweist, an denen Druckluftleitungen (10, 11), die zum Reifen (6) laufen, anschließbar sind, wobei im Zwischenraum zwischen dem Axialabschnitt (30) und der Ringanordnung (46) sowie der Hülse (14) eine Dichtungsanordnung (38) vorgesehen ist, über die zwei umlaufende, gegeneinander und nach außen abgedichtete Bereiche (42, 43) gebildet sind, derart, dass über eine Einlassbohrung (21, 21') zugeführte Druckluft nur zu einer zugeordneten Auslassbohrung (36, 37) gelangt.

## Beschreibung

Die Erfindung betrifft eine Einrichtung zur Einstellung des Luftdrucks eines an einer Fahrzeugachse über eine Felge angeordneten Luftreifens. Insbesondere bei mobilen Arbeitsmaschinen, beispielsweise Traktoren oder Ähnlichem, ist es häufig erforderlich, den Reifenluftdruck im Fahrbetrieb sowie im Stillstand zu verändern. Diese Veränderung dient beispielsweise der Verringerung des Bodendrucks, des Reifenverschleißes, des Treibstoffverbrauchs oder der Optimierung von Traktionen und Fahrverhalten in entsprechenden Arbeitssituationen. Hierzu dient eine Einrichtung zur Einstellung des Luftdrucks, mit der es möglich ist, einen bestimmten Luftstrom von nicht rotierenden Achskomponenten zu den während der Fahrt rotierenden Komponenten, und schließlich zum Reifen selbst zu realisieren. Der Luftstrom dient zum Aufpumpen des Reifens sowie zur Kontrolle wenigstens eines Ventils, über das Luft aus dem Reifen abgelassen werden kann.

Eine solche Einrichtung ist beispielsweise aus WO 2012/045533 A1 bekannt. Diese Einrichtung zeigt drei an einem Trägerkörper ausgebildete, umlaufende und auf verschiedenen Radien liegende Ringnuten, in denen entsprechende Dichtringe angeordnet sind, über welche die Ringnuten gegen eine Anlaufscheibe abgedichtet sind. Die Ringnuten sind jeweils Teil eines Kanalsystems, über das jeweils ein Luftstrom geführt wird. Diese bekannte Einrichtung ist im Aufbau und der Montage relativ aufwändig, sie verlangt eine entsprechende mechanische Anpassung der fahrzeugseitig vorgesehenen und eingebundenen Bauteile, wie auch unterschiedliche Dichtungskomponenten zu verwenden sind, resultierend aus der konzentrischen Nutanordnung.

Der Erfindung liegt damit das Problem zugrunde, eine Einrichtung anzugeben, die demgegenüber verbessert ist.

Zur Lösung dieses Problems ist erfindungsgemäß eine Einrichtung zur Einstellung des Luftdrucks vorgesehen. Diese umfasst eine auf einem positionsfesten Achsgehäuse aufzusetzende Hülse mit zwei separaten, umfangsmäßig versetzten Luftkanälen, die jeweils eine Einlassbohrung, an der eine Druckluftleitung anschließbar ist, und jeweils eine erste Radialbohrung aufweisen, eine auf die Hülse aufgesetzte Ringanordnung mit wenigstens zwei zweiten Radialbohrungen und jeweils einer umlaufenden Nut am Innendurchmesser, die mit jeweils einer ersten Radialbohrung kommuniziert7, sowie einen Überring, der einen Radialabschnitt aufweist, mit dem er drehfest mit der Fahrzeugachse zu verbinden ist, und der einen Axialabschnitt aufweist, mit dem er die Ringanordnung übergreift, und der zwei Auslassbohrungen aufweist, an denen Druckluftleitungen, die zum Reifen laufen, anschließbar sind, wobei im Zwischenraum zwischen dem Axialabschnitt und der Ringanordnung sowie der Hülse eine Dichtungsanordnung vorgesehen ist, über die zwei umlaufende, gegeneinander und nach außen abgedichtete Bereiche gebildet sind, derart, dass über eine Einlassbohrung zugeführte Druckluft nur zu einer zugeordneten Auslassbohrung gelangt.

Die erfindungsgemäße Einrichtung zeichnet sich durch einen radialen Aufbau auf dem Achsgehäuse aus. Auf dem Achsgehäuse sitzt eine Hülse auf, die zwei axiale, über einfache Sackbohrungen ausgebildete und voneinander unabhängige bzw. getrennte Luftkanäle aufweist. Über ein einfaches Dichtelement ist diese Axialbohrung axial geschlossen, so dass ein Zugang zu dem Kanal lediglich über die Einlassbohrung respektive die erste Radialbohrung gegeben ist. An der Einlassbohrung ist eine Druckluftleitung anschließbar, so dass gezielt Druckluft in jeden einzelnen axialen Luftkanal geleitet werden kann, der über die erste Radialbohrung austreten kann. Die beiden Luftkanäle sind umfangsmäßig um ein definiertes Winkelinkrement versetzt, sie kommunizieren also nicht miteinander. Am einen Luftkanal ist eine Druckluftleitung anschließbar, über die der Reifen gezielt aufpumpbar ist, an der anderen Einlassbohrung ist eine zweite Druckluftleitung anschließbar, über die ein Steuerluftstrom gebbar ist, der zum Öffnen eines dem Reifen zugeordneten Ablassventils dient, um gezielt Luft aus dem Reifen abzulassen.

Auf dieser Hülse sitzt eine Ringanordnung, die wenigstens zwei zweite Radialbohrungen und jeweils eine umlaufende Nut am Innenumfang, in die die jeweilige zweite Radialbohrung mündet, aufweist. Die Nuten sind so positioniert, dass sie jeweils unmittelbar mit den ersten Radialbohrungen der Hülse fluchten. Das heißt, dass über diese Ringanordnung letztlich eine Verlängerung dieser Radialbohrungen gegeben ist. Natürlich können pro Nut auch mehrere zweite Radialbohrungen vorgesehen sein.

In der nächstfolgenden Radialebene befindet sich der Axialabschnitt eines Überrings. Dieser im Querschnitt L-förmige Überring ist mit seinem Radialabschnitt über geeignete Befestigungsmittel auf der Achse festgelegt, das heißt er rotiert mit dem Rad. Der Axialabschnitt übergreift die Ringanordnung, er dreht sich also relativ zu dieser positionsfesten Ringanordnung. Am Axialabschnitt sind nun zwei Auslassbohrungen vorgesehen, an denen jeweils Druckluftleitungen anschließbar sind. Die eine Druckluftleitung dient als Befüllleitung, sie läuft an einem entsprechenden felgenseitigen Anschluss. Über sie gelangt die über die eine Einlassbohrung zugeführte Fülldruckluft in den Reifen. An der anderen Auslassbohrung ist eine zweite Druckluftleitung anschließbar, über die der Kontrollluftstrom geführt wird, der zu einem entsprechenden, hierüber schaltbaren Ventil gelangt, das bei Anlegen eines Luftstromes öffnet. Das Ventil seinerseits ist mit dem Reifen verbunden, so dass Luft abgelassen werden kann.

Wie ausgeführt übergreift der Axialabschnitt die Ringanordnung radial mit hinreichendem Abstand. Um sicherzustellen, dass die über die eine Einlassbohrung oder die andere Einlassbohrung zugeführte Druckluft auch korrekterweise zu der zugeordneten Auslassbohrung und damit der entsprechenden nachgeschalteten Druckluftleitung gelangt, ist im Zwischenraum zwischen dem Axialabschnitt und der Ringanordnung sowie der Hülse eine Dichtungsanordnung vorgesehen. Diese dichtet zum einen den Zwischenraum zwischen Axialabschnitt und Hülse nach außen hin ab. Zum anderen wird der Zwischenraum in zwei axial hintereinanderliegende Bereiche oder Kammern getrennt, wobei im einen Bereich die eine zweite Radialbohrung und im anderen Bereich die andere zweite Radialbohrung mündet. In jeweils einem Bereich mündet aber auch jeweils eine Auslassbohrung. Das heißt, dass über diese Dichtanordnung sichergestellt wird, dass über diese Dichtanordnung die entsprechenden, ringförmig umlaufenden Luftkammern gebildet werden, über die die separaten Luftströme auch separat und gezielt zur jeweiligen Zielkomponente geführt werden können.

Der radiale Aufbau ist relativ einfach, insbesondere, als vor allem im Bereich der Dichtungsanordnung, insbesondere soweit die quasi innenliegende Abdichtung zur Bildung der Bereiche oder Luftkammern betroffen ist, die Dichtelemente quasi auf einer Radialebene liegen. Das heißt, dass teilweise gleiche Dichtelemente verwendet werden können, um die entsprechende Abdichtung zu realisieren. Auch ist die Montage relativ einfach, nachdem die jeweiligen Bauteile auf einfache Weise axial auf das Achsgehäuse respektive im Falle des Überrings auf die Achse geschoben werden können. Entsprechende Anpassungen der fahrzeugseitigen Komponenten sind hierfür nicht erforderlich, so dass grundsätzlich die Möglichkeit besteht, diese Einrichtung auch an bestehenden Systemen verbauen zu können. Die Einrichtung kann nahe dem äußeren Achslager der Achse verbaut werden, so dass es im Betrieb zu vernachlässigbaren Verkippungen oder Verschiebungen innerhalb der Einrichtung respektive des Systems kommt.

Die Dichtelemente, die innerhalb der Dichtungsanordnung zur Gewährleistung der nahezu verlustfreien Druckluftübertragung zwischen stehenden und rotierenden Komponenten dienen, sind für das Hochdrucksystem, in dem die Fülldruckluft strömt, sowie für das Kontrollsystem, das den Ventilsteuerstrom zum gezielten Luftablassen führt, teilweise identisch, so dass nicht eine Vielzahl unterschiedlicher Dichtelemente vorzuhalten ist.

Ein Element der Einrichtung ist die Ringanordnung. Diese Ringanordnung kann bevorzugt mittels zweier separater Ringe, die jeweils wenigstens eine, vorzugsweise mehrere zweite Radialbohrungen und jeweils eine umlaufende Nut am Innendurchmesser aufweisen, gebildet sein. Diese beiden Ringe werden auf die Hülse aufgeschoben und positioniert und anschließend entsprechend befestigt, sie können beispielsweise aufgeschrumpft oder verschraubt werden. Sie dienen letztlich als Träger respektive Auflager für die entsprechenden Teile der Dichtungsanordnung, die der Abdichtung der entsprechenden Teilkammern dient. Hierzu können die Ringe eine entsprechende Form mit seitlichen umlaufenden, axial gesehen offenen Nuten aufweisen, in die die Dicht-elemente eingelegt sind. Alternativ wäre es aber auch denkbar, die Ringanordnung mittels eines einzelnen, dann axial entsprechend breiteren Ring zu bilden, an dem die beiden zweiten Radialbohrungen vorgesehen sind. Auch dieser würde dann eine entsprechende Nutkonfiguration aufweisen, um die Dichtelemente entsprechend zu positionieren.

Um die Teilkammern abzudichten sieht die Erfindung ferner vor, dass die Dichtungsanordnung mehrere umlaufende Dichtscheiben sowie zwei radial stehende Anlaufscheiben umfasst, wobei die Dichtscheiben die Ringanordnung zum Radialabschnitt sowie zu den drehfest mit dem Axialabschnitt verbundenen, mitdrehenden Anlaufscheiben hin abdichten. Die Anlaufscheiben erstrecken sich aus ihrer drehfesten Anordnung an dem Axialabschnitt des Überrings zur Ringanordnung respektive zur Hülse hin. Die umlaufenden Dichtscheiben dichten nun axial gesehen die Ringanordnung einerseits gegen die Anlaufscheiben hin ab, am anderen Ende des Kammervolumens schließlich gegen den Radialabschnitt des Überrings, so dass die beiden entsprechenden Bereiche bzw. Teilkammern gebildet und radial abgedichtet sind. Die Dichtscheiben liegen an der Ringanordnung an, die Anlaufscheiben respektive der Radialabschnitt drehen sich relativ zu den Dichtscheiben, die an diesen schleifend anliegen und abdichten.

Zweckmäßigerweise greift dabei eine Anlaufscheibe radial in eine Radialnut der Ringanordnung, insbesondere zwischen die beiden axial beabstandeten Ringe ein, während die andere Anlaufscheibe axial beabstandet hinter der Ringanordnung angeordnet ist. Die Anlaufscheiben sind entsprechend breit gewählt, so dass sich eine hinreichende Überdeckung zur Ringanordnung ergibt und die zwischen Anlaufscheibe und Ringanordnung positionierten Dichtscheiben an beiden hinreichend flächig anliegen.

Wenngleich es ausreichend ist, zwischen Ringanordnung und Anlaufscheibe respektive Radialabschnitt nur einen Dichtring zu positionieren, ist es zweckmäßig, an jeder Dichtposition zwei axial hintereinander geschaltete Dichtringe vorzusehen.

Um den gesamten Zwischenraum zwischen Hülse und Überring axial abzudichten, kann die Dichtungsanordnung des Weiteren eine Kassettendichtung umfassen. Eine Kassettendichtung besteht immer aus einem drehenden und einem nichtdrehenden Teil, welche beide durch verschiedenste Dichtlippen in radialer und/oder axialer Anordnung die Dichtfunktion realisieren.

Die Hülse selbst wird zweckmäßigerweise mittels eines Exzenterspannrings auf dem Achsgehäuse befestigt. Denkbar sind auch andere Befestigungsmöglichkeiten, beispielsweise unter Verwendung entsprechender Schrauben oder Ähnlichem.

Der Überring wird wie ausgeführt über seinen Radialabschnitt achsseitig befestigt und drehfest angeordnet. Dies kann auf einfache Weise mittels eines Spacerrings erfolgen, der zumeist lose auf der Achse sitzt, und über den der Radialabschnitt gegen einen achsseitigen Radialbund gespannt ist. Der Spacer seinerseits kann auf der anderen Seite gegen den auf der Achse befestigten Innenring des äußeren Achslagers anliegen bzw. ist über dieses verspannt, so dass sich ein fester Verbund ergibt. Über eine auf dem Spacer angeordnete Dichtung wird das mit Öl oder Fett beaufschlagte Achslager vom Dichtsystem axial abgetrennt. Die Dichtung kann eine Kassettendichtung sein.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Figur 1: eine Prinzipdarstellung einer Teilansicht einer Radachse mit daran angeordnetem Reifen und einer erfindungsgemäßen Einrichtung,
- Figur 2: eine vergrößerte Schnittansicht durch die erfindungsgemäße Einrichtung in einer ersten Umfangsschnittebene, und
- Figur 3: eine Schnittansicht entsprechend Figur 2 in einer zweiten Umfangsebene.

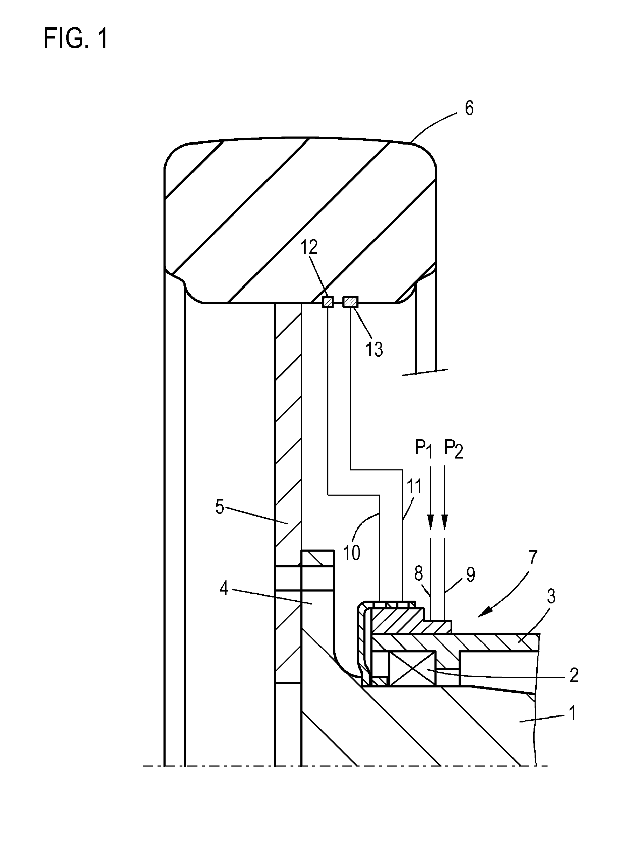

Figur 1 zeigt eine Prinzipdarstellung einer Achsanordnung, beispielsweise einer Hinterachse eines Traktors. Diese umfasst eine Achse 1, die über ein oder mehrere Achslager 2 in einem Achsgehäuse 3 drehgelagert ist. An einem Radialflansch 4 der Achse 2 ist eine Felge 5, an der ein Reifen 6 angeordnet ist, befestigt.

Am Achsgehäuse 3 ist eine erfindungsgemäße Einrichtung 7 zur Einstellung des Luftdrucks im Reifen 6 vorgesehen. Zu dieser führen zwei Druckluftleitungen 8, 9, über die separate Druckluftströme, dargestellt mit P1 und P2, zugeführt werden können. Jeder Luftstrom P1 und P2 wird in der Einrichtung 7 separat geleitet und gelangt über die Einrichtung 7 zu von dieser abgehenden Druckluftleitungen 10, 11. Diese sind, worauf nachfolgend noch eingegangen wird, an einem rotierenden Element der Einrichtung 7, nämlich einem Überring, angeordnet, der gemeinsam mit der Achse 1 und damit der Felge 5 und dem Reifen 6 rotiert. Die Druckluftleitung 10 läuft exemplarisch zu einem Steuerventil 12, das über den Druckluftimpuls zum Öffnen angesteuert werden kann, so dass Luft aus dem Reifen 6 abgelassen werden kann. Die Druckluftleitung 11 läuft zu einem Rückschlagventil 13, das reifenseitig respektive felgenseitig vorgesehen ist. Liegt ein hoher Luftdruck über die Leitung 11 an, so öffnet das Rückschlagventil 13 und der Füllluftstrom gelangt zum Aufpumpen in den Reifen 6. Die jeweiligen Luftströme P1 und P2 werden natürlich über eine oder zwei separate Drucklufterzeuger, gegebenenfalls mit nachgeschalteten Ventileinrichtungen, zugeführt.

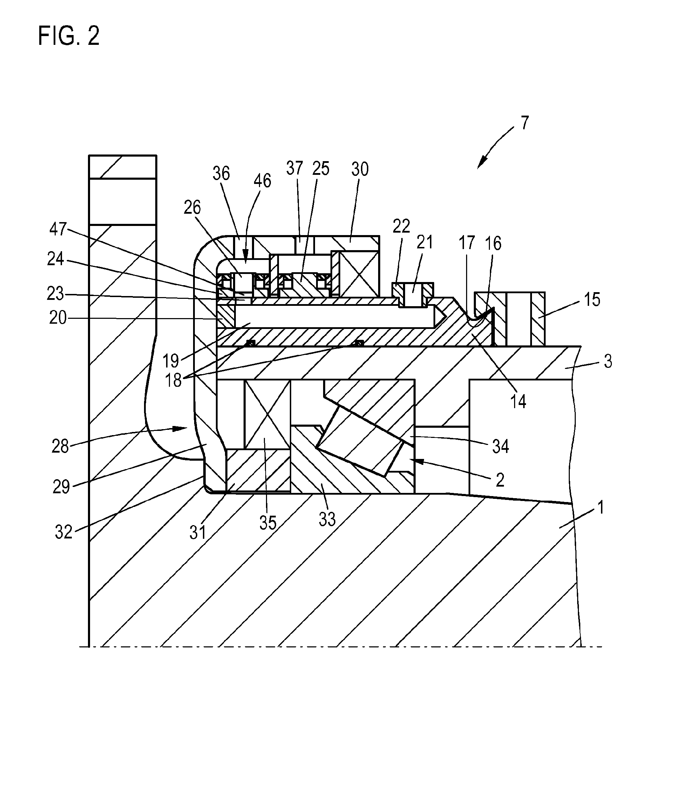

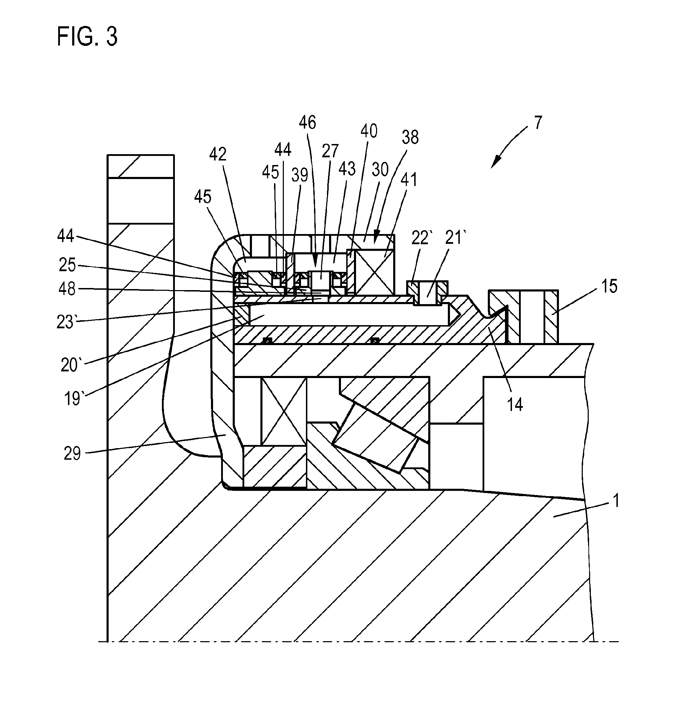

Die Figuren 2 und 3 zeigen zwei Schnittansichten der erfindungsgemäßen Einrichtung 7 an unterschiedlichen Umfangspositionen. Figur 2 zeigt eine Schnittansicht, in der das Kanalsystem, das zum Bedienen der Kontrollluftstrom-Druckleitung 10 dient, zeigt, während Figur 3 eine entsprechende Schnittansicht durch das Kanalsystem, das zum Bedienen der Füllluftstrom-Druckluftleitung 11 dient, zeigt.

Die erfindungsgemäße Einrichtung umfasst eine Hülse 14, die auf dem Achsgehäuse 3 aufgesetzt ist und im gezeigten Beispiel mittels eines Exzenterspannrings 15, der mit seiner Spanngeometrie 16 eine entsprechende Spanngeometrie 17 der Hülse 14 hintergreift, fixiert ist. Über zwei Dichtringe 18 ist die Abdichtung zum Achsgehäuse 3 gegeben.

Die Hülse 14 weist einen ersten Luftkanal 19 auf, der als einfache Sackbohrung ausgeführt ist und am Eintritt über einen Dichtstopfen 20 geschlossen ist. Eine Einlassbohrung 21, eine einfache Radialbohrung, führt in den Luftkanal 19. In diese Einlassbohrung 21 ist im gezeigten Beispiel ein Anschlusselement 22 eingesetzt, beispielsweise eingeschraubt, an dem die Luftleitung 8 angeschlossen werden kann.

Eine erste Radialbohrung 23 am anderen Ende des Luftkanals 19 ermöglicht es der zugeführten Druckluft aus dem Luftkanal 19 auszutreten.

Der grundsätzliche Aufbau des zweiten Luftkanalsystems hülsenseitig, wie in Figur 3 gezeigt, ist nahezu identisch. Vorgesehen ist ein zweiter Luftkanal 19', wiederum realisiert in Form einer Sackbohrung, der über den Dichtstopfen 20' geschlossen ist. In einer in den Luftkanal 19' führenden Einlassbohrung 21' ist auch hier ein Anschlusselement 22' eingesetzt, an dem die Druckluftleitung 9, die den Füllluftstrom zuführt, angeschlossen werden kann.

Vorgesehen ist auch hier eine erste Radialbohrung 23', die jedoch - vgl. Figur 2 - axial an einer anderen Position als die erste Radialbohrung 23 des Luftkanals 19 liegt. Während also über den Luftkanal 19 zugeführte Luft durch die Radialbohrung 23 austritt, tritt die über den Luftkanal 19' zugeführte Druckluft durch die Radialbohrung 23' aus.

Wie den Figuren 2 und 3 zu entnehmen ist, sitzt auf der Hülse 14 eine Ringanordnung 46 bestehend aus zwei separaten Ringen 24, 25. Diese Ringe 24, 25 können beispielsweise auf die Hülse aufgeschrumpft sein oder dort mit Schrauben oder Ähnlichem befestigt sein.

Der Ring 24 weist eine oder mehrere zweite Radialbohrungen 26 und eine umlaufende Nut 47 am Innendurchmesser, in der die Radialnut 26 mündet, auf, die permanent egal in welcher Montageposition, siehe Figur 2, mit der ersten Radialbohrung 23 des Luftkanals 19 kommuniziert. Ebenso weist, siehe Figur 3, der Ring 25 eine oder mehrere zweite Radialbohrungen 27 und eine umlaufende Nut 48 am Innendurchmesser, in der die Radialbohrung 27 mündet, auf, die mit der ersten Radialbohrung 23' des Luftkanals 19' kommuniziert. Da die Ringe 24 und 25 jeweils die radial umlaufende Nut 47, 48 am Innendurchmesser afuweisen, muss während der Montage nicht auf ein genaues Fluchten der Radialbohrungen 26, 27 mit den Radialbohrungen 23', 23 geachtet werden. In den Figuren 2 und 3 ist jeweils ein Schnitt in die Ebene der jeweiligen zweiten Radialbohrung 26, 27 gezeigt. Die Breite der Nut 47, 48 kann der Radialbohrungsbreite entsprechen oder, je nach Breite des Rings, auch etwas breiter oder schmäler sein.

Wie die Figuren zeigen, weist jeder Ring 24, 25 ein im Querschnitt T-förmiges Profil auf, das heißt, es sind an den Seiten entsprechende offene Nuten oder Falze vorgesehen.

Weiterhin vorgesehen ist ein Überring 28, umfassend einen Radialabschnitt 29 sowie einen Axialabschnitt 30. Der Radialabschnitt 29 ist über einen Spacerring 31 an einem Radialbund 32 der Achse 1 festgelegt. Der Spacer 31 stützt sich am Innenring 33 des Achslagers 2 ab, dessen Außenring 34 im Achsgehäuse 3 sitzt. Zwischen Spacerring 31 und Achsgehäuse 3 befindet sich ein Dichtelement 35.

Der Axialabschnitt 30 erstreckt sich ersichtlich axial gesehen über die Hülse 14 respektive die Ringanordnung 46. An ihm sind zwei Auslassbohrungen 36, 37 vorgesehen. In diese sind, hier nicht näher gezeigt, entsprechende Anschlussstücke zu setzen, an denen wiederum die beiden Druckluftleitungen 10 (an der Auslassbohrung 36) respektive 11 (an der Auslassbohrung 37) anzusetzen sind. Infolge der Befestigung des Überrings 28 an der Achse 1 dreht sich der Überring zwangsläufig mit dieser und damit auch mit dem Reifen 6, so dass die Positionen der Auslassbohrungen 36, 37 relativ zu den Positionen des Steuerventils 12 und des Rückschlagventils 13 in jeder Drehstellung gleich sind, so dass starre, aber auch flexible Leitungen 10, 11 verlegt werden können.

Um den Zwischenraum zwischen dem Axialabschnitt 30 und der Ringanordnung 46 respektive der Hülse 14 entsprechend abdichten zu können und definierte Bereiche bzw. Luftkammern zu bilden, ist eine Dichtungsanordnung 38 vorgesehen. Die Dichtungsanordnung 38 ist in beiden Figuren 2 und 3 gezeigt, ihr Aufbau ist insoweit umfangssymmetrisch. Aus Gründen der Übersichtlichkeit sind die entsprechenden diesbezüglichen Bezugszeichen in Figur 3 gesetzt.

Die Dichtungsanordnung 38 umfasst zum einen zwei Anlaufscheiben 39, 40, die am Axialabschnitt 30 festgelegt sind, sie laufen also mit diesem bei einer Raddrehung um. Sie erstrecken sich radial gesehen nach innen zur Ringanordnung 46. Die Anlaufscheibe 39 greift in den Zwischenraum zwischen den beiden Ringen 24, 25, während die Anlaufscheibe 40 sich seitlich neben den Ring 25 erstreckt. Der Anlaufscheibe 40 folgend ist eine Kassettendichtung 41 vorgesehen, die beispielsweise ebenfalls am Axialabschnitt 30 angeordnet ist und zur Hülse 14 hin gegen Schmutzeintritt von außen abdichtet.

Die eigentliche Trennung respektive Ausbildung der beiden getrennten Bereiche bzw. Luftkammern 42, 43 geschieht sodann mittels entsprechender Dichtscheiben 44, 45, die jeweils als Scheibenpaar angeordnet sind. Die Dichtscheiben 44, 45 laufen um, sind also axial gesehen hintereinander angeordnet. In Figur 3 links dichten die beiden Dichtscheiben 44, 45 zum Radialabschnitt 29 hin ab, wobei die Dichtscheibe 44 am Radialabschnitt 29 anliegt respektive an diesem schleift, während die Dichtscheibe 45 am Ring 24 und an der Dichtscheibe 44 anliegt. An der gegenüberliegenden Ringseite folgt wiederum eine Dichtscheibe 45, die am Ring 24 anliegt, der wiederum eine Dichtscheibe 44 folgt, die an der Anlaufscheibe 39 anliegt und an dieser schleift. Eine spiegelverkehrte Anordnung findet sich auf der anderen Seite der Anlaufscheibe 39. Es folgt hier also zunächst eine Dichtscheibe 44 und sodann eine Dichtscheibe 45, die am Ring 25 anliegt. An der gegenüberliegenden Ringseite findet sich sodann zunächst die Dichtscheibe 45, axial gefolgt von der Dichtscheibe 44, die wiederum an der Anlaufscheibe 40 anliegt. Hierüber sind die beiden Bereiche bzw. Luftkammern 42, 43 umfangsmäßig und axial gesehen vollständig abgedichtet.

Wird nun über die Einlassbohrung 21 ein Kontrollluftstrom zugeführt, so gelangt dieser über die Radialbohrungen 23, die umlaufende Nut 47 und die Radialbohrung 26 in den Bereich 42 und von diesem über die Auslassbohrung 36 in die Druckluftleitung 10 und schließlich zum Kontrollventil 12. Dies gilt unabhängig davon, wie nun konkret die Position der Austrittsöffnung 36 ist, da sich der Bereich 42 bzw. die Luftkammer ringförmig um die Achse erstreckt und folglich die Auslassöffnung 36 immer mit der Luftkammer 42 kommuniziert.

Wird über die Einlassbohrung 21' ein Füllluftstrom zugeführt, so gelangt dieser über den Luftkanal 19', die Radialbohrungen 23', die umlaufende Nut 48 und die Radialbohrung 27 in den zweiten Bereich 43 und von dieser über die Auslassbohrung 37 in die Druckluftleitung 11. Bei hinreichendem Luftdruck öffnet sodann das Rückschlagventil 13 und der Reifen 6 kann hierüber befüllt werden.

Im Rahmen der Montage werden die entsprechenden Komponenten auf einfache Weise axial entsprechend aufgeschoben. Der Überring 28 wird auf die Achse 1 aufgeschoben, die Hülse 14 und der Exzenterspannring 15 können entsprechend auf das Achsgehäuse 3 aufgeschoben werden. In entsprechender Weise erfolgt sodann der sukzessive Aufbau der Dichtungsanordnung 38 und der Ringe 24, 25, die in der in den Figuren 2 und 3 gezeigten Reihenfolge entsprechend aufgeschoben respektive positioniert werden. Alternativ ist es möglich, das gesamte Dichtungssystem mit sämtlichen Komponenten auf der Welle zu montieren und anschließend die Welle inklusive Lager in das Achsgehäuse einzuschieben. Hierbei ist die Hülse vorsichtig auf das Achsgehäuse aufzuschieben und anschließend über z. B. den Exzenterring zu verspannen.

Wenngleich im gezeigten Ausführungsbeispiel die Ringanordnung 46 mittels zweier separater Ringe 24, 25 gebildet ist, wäre es auch denkbar, einen gemeinsamen, axial gesehen breiteren Ring zu positionieren, an dem einerseits seitlich die entsprechenden Nuten bzw. Falze ausgebildet sind, und in der Mitte eine entsprechende, tiefergehende Nut ausgebildet wird, in die die Anlaufscheibe 39 eingreift.

Ferner wäre es denkbar, anstelle jeweils eines Paares von Dichtscheiben 44, 45 nur eine, dann entsprechende breitere Dichtscheibe zu verwenden.

### Bezugszeichenliste

- 1: Achse
- 2: Achslager
- 3: Achsgehäuse
- 4: Radialflansch
- 5: Felge
- 6: Reifen
- 7: Einrichtung
- 8: Druckluftleitung
- 9: Druckluftleitung
- 10: Druckluftleitung
- 11: Druckluftleitung
- 12: Steuerventil
- 13: Rückschlagventil
- 14: Hülse
- 15: Exzenterspannring
- 16: Spanngeometrie
- 17: Spanngeometrie
- 18: Dichtring
- 19: Luftkanal
- 19': Luftkanal
- 20: Dichtstopfen
- 20': Dichtstopfen
- 21: Einlassbohrung
- 21': Einlassbohrung
- 22: Anschlusselement
- 22': Anschlusselement
- 23: Radialbohrung
- 23': Radialbohrung
- 24: Ring
- 25: Ring
- 26: Radialbohrung
- 27: Radialbohrung
- 28: Überring
- 29: Radialabschnitt
- 30: Axialabschnitt
- 31: Spacerring
- 32: Radialbund
- 33: Innenring
- 34: Außenring
- 35: Dichtelement
- 36: Auslassbohrung
- 37: Auslassbohrung
- 38: Dichtungsanordnung
- 39: Anlaufscheibe
- 40: Anlaufscheibe
- 41: Kassettendichtung
- 42: Bereich
- 43: Bereich
- 44: Dichtscheibe
- 45: Dichtscheibe
- 46: Ringanordnung
- 47: Nut
- 48: Nut

## Patentansprüche

1. Einrichtung zur Einstellung des Luftdrucks eines an einer Fahrzeugachse über eine Felge angeordneten Luftreifens, umfassend eine auf einem positionsfesten Achsgehäuse (3) aufzusetzende Hülse (14) mit zwei separaten, umfangsmäßig versetzten Luftkanälen (19, 19'), die jeweils eine Einlassbohrung (21, 21'), an der eine Druckluftleitung (8, 9) anschließbar ist, und jeweils eine erste Radialbohrung (23, 23') aufweisen, eine auf die Hülse (14) aufgesetzte Ringanordnung (46) mit wenigstens zwei zweiten Radialbohrungen (26, 27) und jeweils einer umlaufenden Nut (47, 48) am Innendurchmesser, die mit jeweils einer ersten Radialbohrung (23, 23') kommuniziert, sowie einen Überring (28), der einen Radialabschnitt (29) aufweist, mit dem er drehfest mit der Fahrzeugachse (1) zu verbinden ist, und der einen Axialabschnitt (30) aufweist, mit dem er die Ringanordnung (46) übergreift, und der zwei Auslassbohrungen (36, 37) aufweist, an denen Druckluftleitungen (10, 11), die zum Reifen (6) laufen, anschließbar sind, wobei im Zwischenraum zwischen dem Axialabschnitt (30) und der Ringanordnung (46) sowie der Hülse (14) eine Dichtungsanordnung (38) vorgesehen ist, über die zwei umlaufende, gegeneinander und nach außen abgedichtete Bereiche (42, 43) gebildet sind, derart, dass über eine Einlassbohrung (21, 21') zugeführte Druckluft nur zu einer zugeordneten Auslassbohrung (36, 37) gelangt.

2. Einrichtung nach Anspruch 1, **dadurch gekennzeichnet, dass** die Ringanordnung (46) mittels zweier separater Ringe (24, 25), die jeweils eine zweite Radialbohrung (26, 27) aufweisen, gebildet ist.

3. Einrichtung nach Anspruch 1 oder 2, **dadurch gekennzeichnet, dass** die Dichtungsanordnung (38) mehrere umlaufende Dichtscheiben (44, 45) sowie radial stehende zwei Anlaufscheiben (39, 40) umfasst, wobei die Dichtscheiben (44, 45) die Ringanordnung (46) zum Radialabschnitt (29) sowie zu den drehfest mit dem Axialabschnitt (30) verbundenen Anlaufscheiben (39, 40) hin abdichten.

4. Einrichtung nach Anspruch 3, **dadurch gekennzeichnet, dass** eine Anlaufscheibe (39) radial in eine Radialnut der Ringanordnung (46), insbesondere zwischen die beiden axial beabstandeten Ringe (24, 25) greift, während die andere Anlaufscheibe (40) axial beabstandet hinter der Ringanordnung (46) angeordnet ist.

5. Einrichtung nach Anspruch 3 oder 4, **dadurch gekennzeichnet, dass** jeweils zwei oder mehr Dichtringe (44, 45) axial hintereinander geschaltet sind.

6. Einrichtung nach einem der vorangehenden Ansprüche, **dadurch gekennzeichnet, dass** die Dichtungsanordnung (38) eine Kassettendichtung (41) umfasst, die zwischen dem Axialabschnitt (30) angeordnet und der Hülse (14) abdichtet.

7. Einrichtung nach einem der vorangehenden Ansprüche, **dadurch gekennzeichnet, dass** die Hülse (14) mittels eines Exzenterspannrings (15) auf dem Achsgehäuse (3) befestigbar ist.

8. Einrichtung nach einem der vorangehenden Ansprüche, **dadurch gekennzeichnet, dass** der Radialabschnitt (29) in der Montagestellung mittels eines Spacerrings (31), der auf der Achse (1) befestigbar ist, gegen einen achsseitigen Radialbund (32) gespannt ist.
